# EUROPEAN PATENT SPECIFICATION

(11) **EP 0 348 187 B1**
(45) Date of publication and mention of the grant of the patent: **14.09.1994**
(21) Application number: 89306281.0
(22) Date of filing: 22.06.1989
(51) Int. Cl.: H04M 1/72, H04B 7/08, H04B 1/034

(54) **Protective casing for a hand-held portable radio telephone**
Schutzgehäuse für ein tragbares Funktelefon
Boîtier de protection pour un radiotéléphone portatif

(30) Priority: 24.06.1988 JP 154680/88
(43) Date of publication of application: 27.12.1989
(73) Proprietor: NEC CORPORATION, Tokyo (JP)
(72) Inventor: Tamura, Yoshiharu c/o NEC Corporation, Toyko (JP)
(74) Representative: Abnett, Richard Charles

(56) References cited:
- US-A- 4 227 258
- US-A- 4 525 869
- US-A- 4 677 654
- PATENT ABSTRACTS OF JAPAN, vol. 13, no. 142 (E-739)[3490], 7th April 1989 & JP-A-63 303 523
- PATENT ABSTRACTS OF JAPAN, vol. 9, no. 178 (E-330)[1901], 23rd July 1985 & JP-A-60 47 502

## Description

### BACKGROUND OF THE INVENTION

The present invention relates to a protective casing for a hand-held portable radio telephone which protects the telephone against impacts and impurities such as dust while enhancing its portability.

A protective casing for use with a hand-held portable radio telephone is in itself directed toward the protection of the telephone against shocks and impacts as well as from impurities such as dust. Hence, whenever one carries the telephone or operates it for a communication, the protective casing is held integrally with the telephone. Usually, the telephone to be held by such a protective casing has an antenna for transmitting and receiving electromagnetic waves with a remote terminal. The antenna of the telephone may be implemented as a λ/4 or λ/2 whip antenna, sleeve antenna or similar external antenna to be mounted on the outer periphery of the telephone, or a loop antenna, microstrip antenna, inverted F-type antenna or similar built-in antenna which is accommodated in the telephone. It is a common practice to provide the telephone with one or both of such two different kinds of antennas. The telephone with an antenna or antennas is often put in the user's pocket or bag or put on the user's waist belt. A prerequisite with this kind of telephone is that while the telephone is carried by a person, its power switch must be constantly turned on to await the reception of an incoming call. In such a condition, either one of the external and internal or built-in antennas is of course maintained operative.

A problem with a portable ratio telephone of the above nature is that it has substantial dimensions inclusive of the external antenna, especially substantial length, resulting in the interference thereof with the user's body or in the projection thereof out of the pocket or bag. To enhance the portability, the telephone may be operated with the built-in antenna alone, i. e., without using the external antenna. With this kind of telephone, however, desirable frequency band and radiation characteristics are not achievable with the built-in antenna unless the antenna has a substantial surface area and is accommodated in an exclusive shielded space which sufficiently shields the antenna from various structural elements of the telephone. Especially, since a substantial part of the casing of the telephone is occupied by a transmitter, receiver, display keys, battery holder and other various structural elements of the telephone, it is extremely difficult to increase the surface area of the built-in antenna or to allocate a sufficient shield space to the same. Should a sufficient surface area of the built-in antenna or a sufficient shielded space be allocated, the telephone casing and, therefore, the entire telephone would become bulky.

### SUMMARY OF THE INVENTION

According to the invention there is provided a protective casing for receiving a hand-held portable radio telephone, comprising a casing body and at least one antenna built in said casing body for connection to the telephone.

Preferably the casing body has at least two antennas built therein. In this case the one of the two antennas which has the more intense electric field may automatically be selected and connected to the telephone.

### BRIEF DESCRIPTION OF THE DRAWINGS

The invention will now be described in more detail by way of example with reference to the accompanying drawings in which:-
Figs. 1 to 4 are views showing prior art protection casings for use with a hand-held portable radio telephone;
Fig. 5 shows a specific configuration of a built-in antenna which is installed in a hand-held portable radio telephone;
Fig. 6 is a perspective view of a protective casing for a hand-held portable radio telephone embodying the present invention;
Fig. 7 is a section along line VII-VII of Fig. 6;
Fig. 8A is a perspective view showing a more specific configuration of an antenna which is associated with the protective casing of Fig. 6;
Fig. 8B is a section along line IX-IX of Fig. 8A;
Fig. 9 is a perspective view showing an alternative embodiment of the present invention;
Fig. 10 is a perspective view showing another alternative embodiment of the present invention;
Figs. 11A and 11B are views demonstrating how a built-in antenna or an external antenna of a telephone and an antenna installed in a protective casing are switched over;
Fig. 12 shows a protective casing of the present invention which is put in the user's pocket;
Fig. 13 is a schematic diagram representative of circuitry for automatically selecting either one of two antennas which are accommodated in a protective casing; and
Fig. 14 is a flowchart demonstrating a specific control procedure executed by a control circuit which is included in the circuitry of Fig. 13.

### DESCRIPTION OF THE PREFERRED EMBODIMENTS

To better understand the present invention, a brief reference will be made to some prior art hand-held portable radio telephones and protective casings associated therewith.

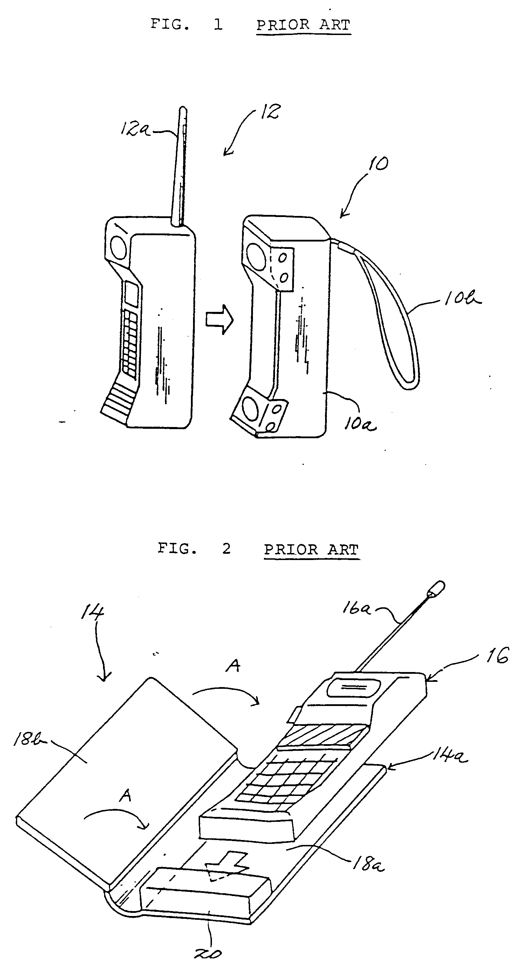

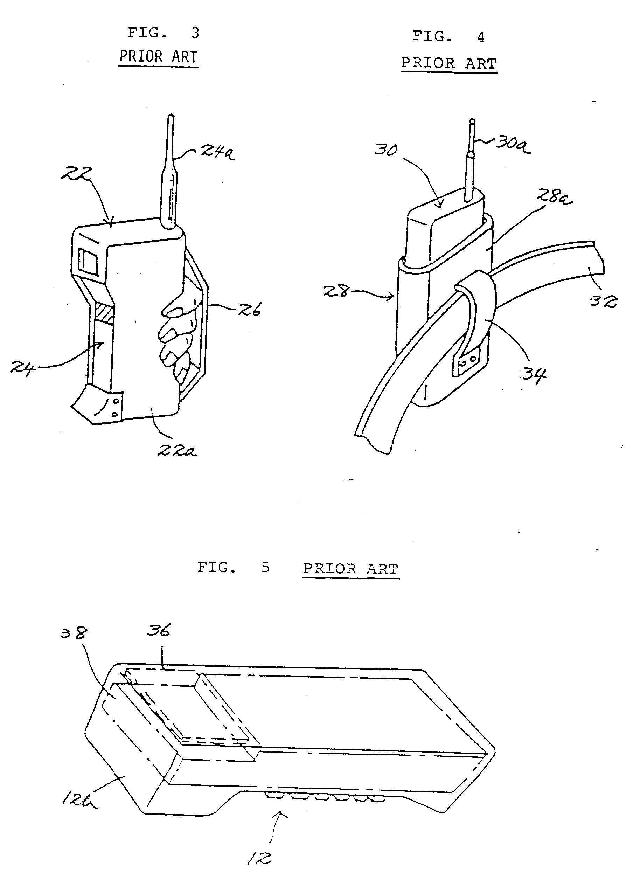

Referring to Fig. 1 of the drawings, a prior art cordless telephone 12 has an external antenna 12a and is bodily accommodated in a protective casing 10. Specifically, the casing 10 has a body 10a which is made of elastic material such as plastics or leather and provided with substantially the same contour as the telephone 12. A strap 10b is fitted on the casing body 10a. Fig. 2 shows another prior art cordless telephone 16 and a protective casing 14 used therewith. As shown, the casing 14 has a body 14a for holding the telephone 16 with an external antenna 16a and has appearance which resembles a book cover or jacket. The casing body 14a has a pair of flaps 18a and 18b, the flap 18a being provided with a pocket 20. After the telephone 16 has been put in the pocket 20 of one flap 18a, the other flap 18b is closed in a direction indicated by an arrow A toward the flap 18a. The casing 10 and 14 shown in Figs. 1 and 2, respectively, are successful in protecting their associated telephones from shocks and impacts as well as from impurities such as dust.

In Fig. 3, another prior art cordless telephone 24 has an external antenna 24a and is received in a protective casing 22. The casing 22 has a body 22a which is provided with a strap 26 for preventing the telephone 24 from slipping off the operator's hand while the telephone 24 is in use. Fig. 4 shows still another prior art cordless telephone 30 having an external antenna 30a and a protective casing 28 associated therewith. The casing 28 has a body 28a on which a strap 34 in the form of a loop is provided for allowing the casing body 28a to be put on a waist belt 32.

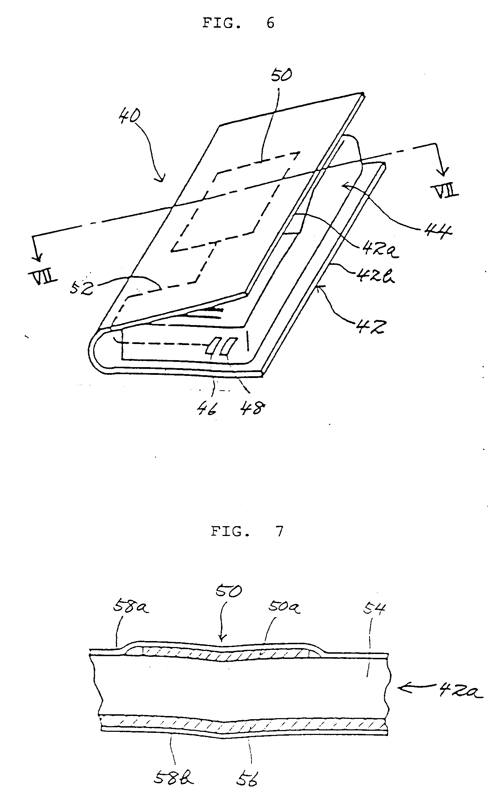

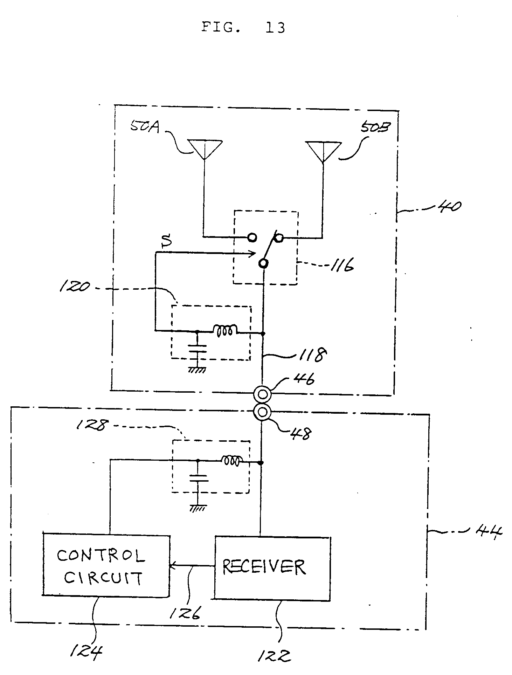

The external antennas 12a, 16a, 24a and 30a shown in Figs. 1 to 4 are rigidly or removably mounted on the telephones 12, 16, 24 and 30, respectively. Besides such an external antenna, a loop antenna, microstrip antenna, inverted F-type antenna or similar antenna is usually built in each of the telephones 12 to 30 and is selectively used in place of the external antenna. Fig. 5 shows such a built-in antenna which is accommodated in a casing 12b of the telephone 12 shown in Fig. 12, by way of example. In Fig. 5, an antenna 36 is disposed in a shielded space which is defined in the telephone casing 12b by a shielding member 38 and associated portions of the casing 12b, the shielded space having predetermined dimensions. In this condition, the antenna 36 is electromagnetically shielded from various structural elements of the telephone 12.

A problem with all of the prior art cordless telephones 12 to 30 are protective casings 10 to 28 is that the external antennas 12a to 30a are obstructive in the portability aspect while the built-in antenna is undesirable for the miniaturization of the telephone, as discussed earlier.

The present invention is achieved by considering the fact that a protection casing heretofore associated with a hand-held portable radio telephone is simply designed to protect the telephone from mechanical shocks and impacts and to enhance the portability, and not to eliminate the above-stated problems.

Referring to Fig. 6 and 7, a protective casing for a hand-held portable radio telephone embodying the present invention is shown and generally designated by the reference numeral 40. As shown, the casing 40 has a body 42 in the form of a book jacket and which is made up of a pair of contiguous flaps 42a and 42b. A portable radio telephone 44 has external high-frequency terminals 46 and 48 and is connected to the casing 40 via the terminals 46 and 48. A flat and rectangular antenna 50 is built in one of the flaps or covers 42a of the casing 40, e. g. in the the flap 42a as indicated by a phantom line in Fig. 6. The antenna 50 is connected to the high-frequency terminals 46 and 48 of the telephone 44 by a feeder 52.

As shown in Fig. 7, the antenna 50 built in the casing 40 is implemented as a microstrip antenna. Specifically, a part of the casing 40 where the antenna 50 is located is constituted by a dielectric 54, an antenna element 50a made of conductive foil and adhered to one major surface of the dielectric 54, and a base plate 56 adhered to the other major surface of the dielectric 54. The antenna element 50a and base plate 56 are respectively concealed by coverings 58a and 58b made of vinyl, for appearance and similar reasons. Of course, the coverings 58a and 58b are not essential in the functional aspect.

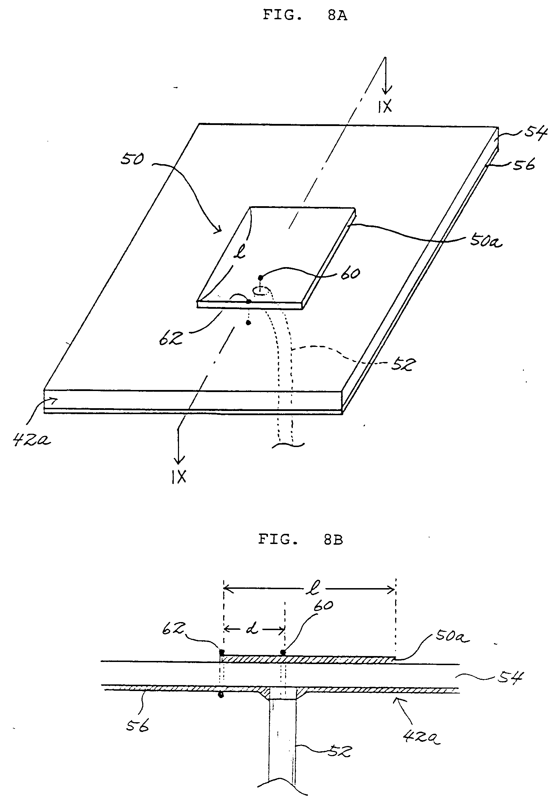

Figs. 8A and 8B indicate a basic configuration of the flat and rectangular antenna 50, assuming that the antenna 50 is a λ/2 microstrip antenna by way of example. As shown, the feeder 52 is connected to a feed point 60 of the antenna element 50a via the base plate 56 and dielectric 54. A short point 62 is defined at one end of the antenna element 50a in the vicinity of the feed point 60 so as to short-circuit the base plate 56 and antenna element 50a. Assume that the rectangular antenna element 50a has a long side *l*, and that the distance between the feed point 60 and the short point 62 is *d*. The long side *l* is substantially λ/4 although it depends on the specific inductivity of the dielectric 54. The input impedance for a desired frequency is determined by the distance *d*. For example, when the dielectric 54 is implemented as a glass epoxy substrate in order to constitute a λ/4 microstrip antenna whose frequency band is 900 megahertz, the long side *l* of the antenna element is about 50 millimeters or so. This length well matches the physical dimensions of a cordless telephone of the type described, implementing a protective casing having desired dimensions. Concerning a λ/2 microstrip antenna, a configuration wherein the short point 62 is defined at the center of the antenna element 50a is known in the art.

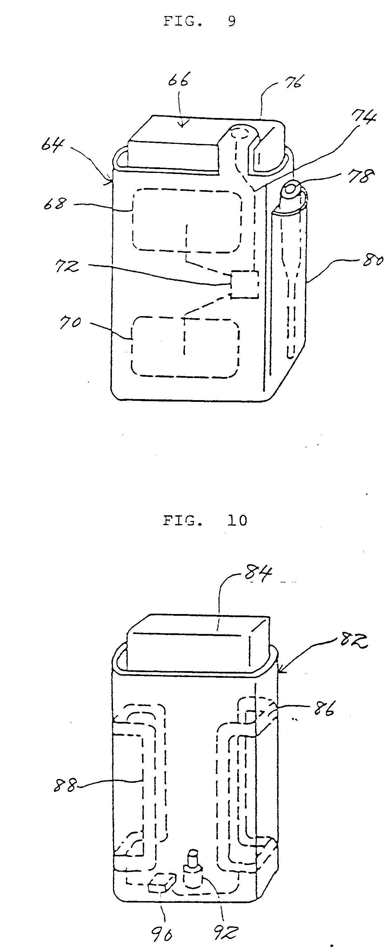

Referring to Fig. 9, an alternative embodiment of the protective casing in accordance with the present invention is shown. In the figure, the protective casing, generally 64, has a box-like configuration which encloses a major part of a portable radio telephone 66. Two antennas 68 and 70 are built in the protective casing 64 and switched over by an antenna switching circuit 72 to effect antenna diversity reception. A feeder 74 is connected at one end to the antenna switching circuit 72 and at the other end to a connector 76. An external antenna 78 may be mounted on the telephone 66 by an antenna connector (not shown). The connector 76 is connected to the antenna connector when the external antenna 78 is removed from the antenna connector. The protective casing 64 has a pocket 80 on one side thereof for storing the antenna 78 when the antenna 78 is removed as mentioned above.

Referring to Fig. 10, another alternative embodiment of the present invention is shown which is similar to the embodiment of Fig. 9 as to the general configuration and antenna diversity reception. In this particular embodiment, the protective casing, generally 82, accommodates a portable radio telephone 84 and has two loop antennas 86 and 88 which are connected to an antenna switching circuit 90. The antennas 86 and 88 and the telephone 84 are interconnected by a connector 92.

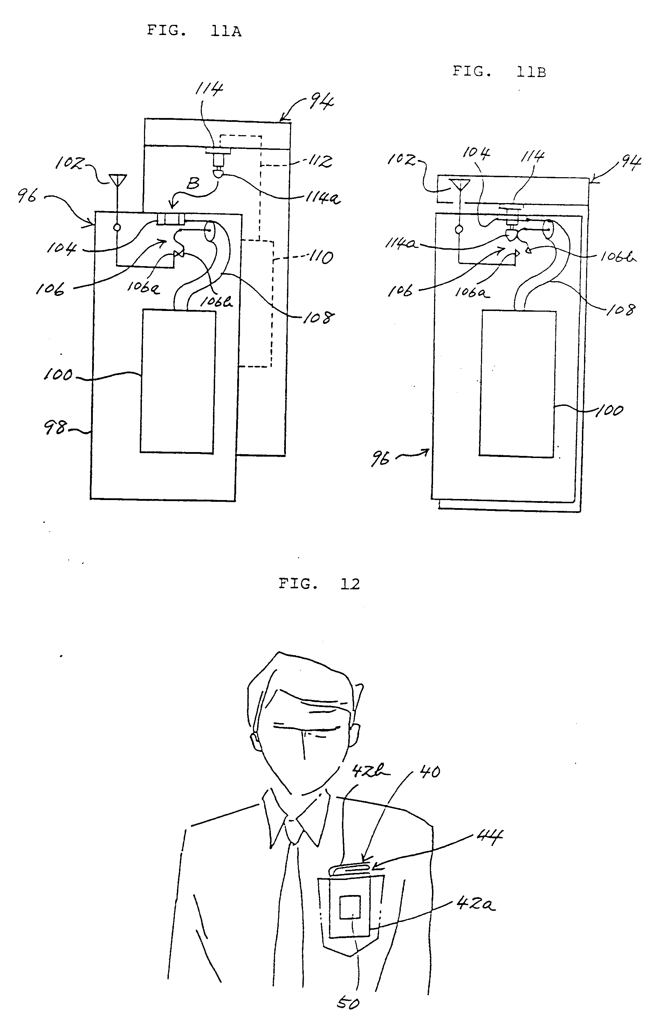

In any of the embodiments shown and described, the portable radio telephone has an external antenna and an internal or built-in antenna. Hence, the external or built-in antenna and the antennas accommodated in the protective casing can be switched over to be selectively used. Such switchover may be effected by the removal of the antenna, as shown in Fig. 9, or by a mechanical or electrical switch. The mechanical or electrical switch may be constructed such that it is automatically actuated when the telephone is inserted into the protective casing. A specific arrangement for such an automatic switchover scheme will be described with reference to Figs. 11A and 11B.

Fig. 11A shows a protective casing 94 and a portable radio telephone 96 which is removed from the casing 94, while Fig. 11B shows the casing 94 with the telephone 96 received in it. The telephone 96 has a casing 98 in which the body 100 of the telephone is accommodated. Also accommodated in the telephone casing 98 are a built-in antenna 102, a terminal 104 allocated to an external antenna, and a normally closed switch 106 having a pair of contacts 106a and 106b. A feeder 108 connected to the telephone body 100 is connected to the antenna terminal 104 and normally closed switch 106. The protective casing 94 has thereinside an antenna 110 which is connected to a coaxial connector 114 by a feeder 112.

As shown in Fig. 11A, when one desires to use the telephone 96 without putting it in the protective casing 94, the built-in antenna 102 connected to the telephone body 100 via the contacts 106a and 106b of the normally closed switch 106 is used or, alternatively, an external antenna is put on the exclusive terminal 104. On the other hand, as one inserts the telephone 96 into the protective casing 94, as shown in Fig. 11B, the exclusive terminal 104 of the telephone 96 is connected to the coaxial connector 114 of the protective casing 94 to in turn connect the telephone body 100 to the antenna 110 of the casing 94. Then, the telephone 96 is ready to operate with the antenna 110. More specifically, when the coaxial connector 114 of the protective casing 94 is inserted in a direction indicated by an arrow B in Fig. 11A, the connector 114 separates the contacts 106a and 106b of the switch 106 with its center conductor 114a, as shown in Fig. 11B. This isolates the built-in antenna 102 of the telephone 96 from the telephone body 110 and brings it into contact with the antenna 110 of the protective casing 94. It is noteworthy that even when such switchover is effected while a conversation is held, the conversation is not interrupted. This is because a portable radio telephone system of the type described is constructed taking account of fading or similar deterioration of the channel and, hence, a conversation is free from interruption despite several seconds of cut-off of electromagnetic wave.

In any of the illustrative embodiments, the portable radio telephone may be used with a headset or an optical handset without picking the telephone out of the user's pocket or the like. This will eliminate the need for the external or internal antenna of the telephone, i. e., only the antenna or antennas built in the protective casing will suffice.

In the embodiment shown in Figs. 6 and 7, the antenna 50 is assembled in only one of the two flaps or covers 42a of the protective casing 40. A prerequisite with the configuration is that, when the casing 40 is put in a coat pocket as shown in Fig. 12, the flap 42a with the antenna 50 be oriented away from the user's body. In the light of this, an antenna may be built in the other flap 42b also. With this alternative scheme, it is possible to achieve a selective antenna diversity reception effect by using either one of the two antennas of the protective casing 40 which is in a better receiving condition than the other.

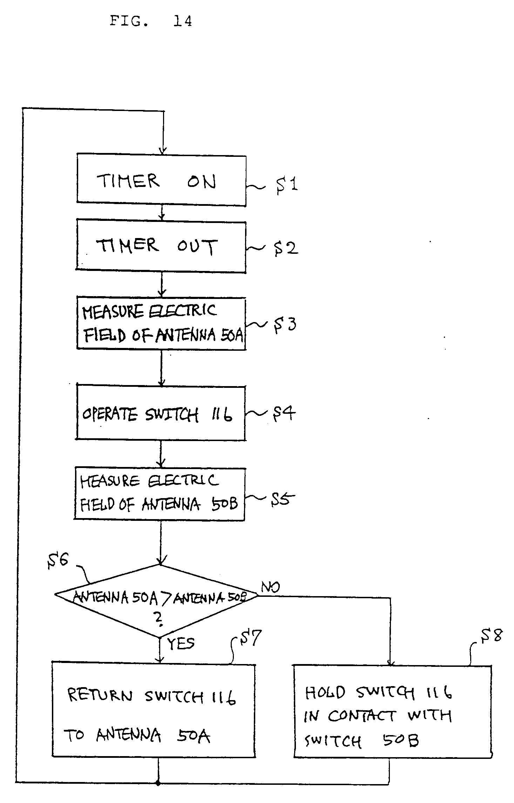

Hereinafter will be described a specific arrangement of the embodiment shown in Figs. 6 and 7 which allows one of two antennas built in the protection casing to be automatically selected for diversity reception, with reference to Figs. 13 and 14.

As shown in Fig. 13, antennas 50A and 50B are respectively installed in the two flaps 42a and 42b of the protective casing 40. The antennas 50A and 50B are selectively connected to the external high-frequency terminal 46 by an antenna switch 116 via a radio frequency (RF) line 118. An RF checking circuit 120 is connected between the antenna switch 116 and the high-frequency terminal 46. The RF checking circuit 120 delivers a control signal S to the antenna switch 116 to thereby switch over the latter. The portable radio telephone 44 has a receiver 122 connecting to the high-frequency terminal 48, a control circuit 124 to which information associated with an electric field is fed from the receiver 122 over a signal line 126, and an RF checking circuit 128 connected between the high-frequency terminal 48 and the control circuit 124. The RF checking circuits 120 and 128 are adapted to eliminate RF losses.

Fig. 14 is a flowchart demonstrating a specific procedure which the control circuit 124 executes for selecting either one of the antennas 50A and 50B. During a communication, a timer is started (step S1) and, on the lapse of a predetermined period of time (S2), an electric field associated with one antenna 50A is measured (S3). Then, the switch 116 is switched over (S4) to measure an electric field associated with the other antenna 50B (S5). In a step S6, which of the measured electric fields is more intense is determined. If the electric field of the antenna 50A is more intense, the switch 116 is caused into contact with the antenna 50A in order to select the antenna 50A (S7). If otherwise, the switch 116 is held in contact with the antenna 50B (S8). In this manner, the switch 116 is controlled by the control circuit 124 to select one of the two antennas 50A and 50B which has a better receiving condition than the other.

It is to be noted that any of the illustrative embodiments can implement a space diversity effect, polarization diversity effect or directional diversity effect as desired, only if the orientation and kind of antenna which is built in the protective casing is adequately selected.

In summary, in accordance with the present invention, an antenna or antennas are accommodated in a protective casing which is associated with a hand-held portable radio telephone. Hence, the protective casing achieves various unprecedented advantages in addition to the conventional resistivity to shocks and impacts, protection against impurities, and portability, as enumerated below.
(1) The protective casing with an antenna has substantially the same dimensions as the telephone and, therefore, it can be put in a pocket or a bag or even on a waist belt without any antenna protruding from it. The casing, therefore, has far greater portability than a prior art casing which has to await the reception of a call with an external antenna being mounted thereon.
(2)Since the antenna in the protective casing has a substantial area in association with the flat and broad configuration of the casing, it achieves better frequency band and radiation characteristics than a built-in antenna of the telephone.
(3) A plurality of antennas can be built in the protective casing due to the large surface area available with the casing, implementing a space diversity effect, polarization diversity effect, directional diversity effect, etc.

Various modifications will become possible for those skilled in the art after receiving the teachings of the present disclosure without departing from the scope thereof.

## Claims

1. A protective casing for receiving a hand-held portable radio telephone, comprising a casing body (64), and characterised by at least one antenna (68,70) built in said casing body for connection to the telephone (66).

2. A protective casing as claimed in claim 1, wherein said casing body (42) comprises a pair of flaps (42a,42b) which are interconnected in a book jacket configuration.

3. A protective casing as claimed in claim 2, wherein each of said flaps comprises a flat dielectric member (54) and a base plate (56) laminated on one of major surfaces of said dielectric member.

4. A protective casing as claimed in claim 2, wherein said antenna comprises a flat conductive member (50a) laminated on the other major surface of said dielectric member.

5. A protective casing as claimed in claim 1, wherein said casing body (64) has a box-like configuration which encloses a major part of said telephone.

6. A protective casing as claimed in claim 1, wherein said casing body has two antennas (68,70) built therein.

7. A protective casing as claimed in claim 6, including means for automatically selecting and connecting to the telephone the one of said two antennas which has a more intense electric field than the other.

8. A protective casing as claimed in claim 1, wherein the telephone comprises an external antenna terminal (104) for mounting an external antenna.

9. A protective casing as claimed in claim 8, wherein said casing body (94) comprises a connector (114) which is engageable with the external antenna terminal (104) and is connected to said at least one antenna (10).

## Patentansprüche

1. Schutzgehäuse zur Aufnahme eines tragbaren Funktelefons mit einem Gehäusekörper (64), gekennzeichnet durch mindestens eine in dem Gehäusekörper eingebaute Antenne (68, 70) zur Verbindung mit dem Telefon (66).

2. Schutzgehäuse nach Anspruch 1, wobei der Gehäusekörper (42) ein Paar Klappen (42a, 42b) aufweist, die nach Art eines Buchdeckels miteinander verbunden sind.

3. Schutzgehäuse nach Anspruch 2, wobei jede Klappe ein flaches, dielektrisches Element (54) und eine Basisplatte (56) aufweisen, die auf einer der Hauptflächen des dielektrischen Elements auflaminiert ist.

4. Schutzgehäuse nach Anspruch 2, wobei die Antenne ein flaches Leiterelement (50a) aufweist, das auf die andere Hauptfläche des dielektrischen Elements auflaminiert ist.

5. Schutzgehäuse nach Anspruch 1, wobei der Gehäusekörper (64) zur Aufnahme eines Hauptteils des Telefons kastenförmig ist.

6. Schutzgehäuse nach Anspruch 1, wobei im Gehäusekörper zwei Antennen (68, 70) eingebaut sind.

7. Schutzgehäuse nach Anspruch 6 mit einer Einrichtung zum automatischen Auswählen und Verbinden derjenigen der beiden Antennen mit dem Telefon, die ein stärkeres elektrisches Feld als die andere wahrnimmt.

8. Schutzgehäuse nach Anspruch 1, wobei das Telefon zum Anschluß einer externen Antenne einen Externantennenanschluß (104) aufweist.

9. Schutzgehäuse nach Anspruch 8, wobei der Gehäusekörper (94) einen Anschluß (114) aufweist, der mit dem Externantennenanschluß (104) verbindbar und mit mindestens einer Antenne (10) verbunden ist.

## Revendications

1. Boîtier de protection pour recevoir un radio téléphone portatif, comprenant un corps de boîtier (64) et caractérisé par au moins une antenne (68, 70) incorporée dans ledit corps du boîtier pour connexion au téléphone (66).

2. Boîtier de protection selon la revendication 1, dans lequel ledit corps de boîtier (42) comprend une paire de volets (42a, 42b) qui sont interconnectés en une configuration de couverture de livre.

3. Boîtier de protection selon la revendication 2, dans lequel chacun desdits volets comprend un élément diélectrique plat (54) et une plaque de base (56) stratifiée sur une des surfaces principales dudit élément diélectrique.

4. Boîtier de protection selon la revendication 2, dans lequel ladite antenne comprend un élément conducteur plat (50a) stratifié sur l'autre surface principale dudit élément diélectrique.

5. Boîtier de protection selon la revendication 1, dans lequel ledit corps de boîtier (64) comporte une configuration de type boîte qui enferme une partie principale dudit téléphone.

6. Boîtier de protection selon la revendication 1, dans lequel ledit corps de boîtier comporte deux antennes (68, 70) incorporées dans celui-ci.

7. Boîtier de protection selon la revendication 6, comportant un moyen pour sélectionner et connecter automatiquement le téléphone à l'une desdites deux antennes qui présente un champ électrique plus intense que l'autre.

8. Boîtier de protection selon la revendication 1, dans lequel le téléphone comprend une borne d'antenne externe (104) pour montage d'une antenne externe.

9. Boîtier de protection selon la revendication 8, dans lequel ledit corps de boîtier (94) comprend un connecteur (114) qui peut être engagé avec la borne d'antenne externe (104) et est connecté à ladite au moins une antenne (10).
